# EUROPEAN PATENT SPECIFICATION

(11) **EP 0 978 796 B1**
(45) Date of publication and mention of the grant of the patent: **21.11.2001**
(21) Application number: 97928278.7
(22) Date of filing: 27.06.1997
(51) Int. Cl.: G06K 7/08, G06K 7/10, G06K 19/04

(54) **SYSTEM FOR ACQUIRING IN SITU INFORMATION RELATIVE TO A POWER CABLE AND TO ITS ACCESSORIES**
SYSTEM ZUR IN-SITU-ERFASSUNG DER INFORMATION ÜBER DIE VORGESCHICHTE EINES ENERGIEKABELS UND SEINES ZUBEHÖRS
SYSTEME POUR L'ACQUISITION IN SITU D'INFORMATIONS RELATIVES A L'HISTORIQUE D'UN CABLE DE PUISSANCE ET DE SES ACCESSOIRES

(30) Priority: 28.06.1996 ES 9600144
(43) Date of publication of application: 09.02.2000
(73) Proprietor: Pirelli Cables y Sistemas, S.A., 08800 Volanova i La Geltru (Barcelona) (ES)
(72) Inventor: MILA VIDAL, Manel, E-08800 Vilanova i La Geltrú(Barcelona) (ES)
(74) Representative: Ponti Sales, Adelaida
(86) International application number: ES9700164
(87) International publication number: WO9800805

(56) References cited:
- EP-A- 0 535 919
- WO-A-93/21544

## Description

The present invention relates to a system for in-situ gathering information relating to the history of a power cable and its accessories, which permits said information to be obtained and modified remotely, without the electromagnetic fields generated by the current circulating through the power cables causing disturbances or erasing of the information.

### BACKGROUND OF THE INVENTION

There exist at present cables which incorporate information relating to their characteristics, printed on the surface of the exterior protective covering.

Said cables have the disadvantage that abrasion of the exterior covering against any other element can rub out the information printed on that covering. Moreover, the information which they can incorporate is very limited, since the surface of the cable on which it can be printed is not usually very large.

Furthermore, if the cable is buried, access to the information is practically impossible.

There also exist other systems for in-situ gathering information applied in other fields, but which could also be used for cables.

One of these systems is the bar-code system.

This system consists of bars printed in different widths, which are read remotely by a reader, with a stored code being obtained.

Said readers include electro-optical devices whose function is to convert the areas of light and darkness of the printed bars into an electrical signal variable in time; signal-converter devices, whose function is to convert the analogue optical signal into a specific wave shape; and digital processors, which have the function of decoding the wave shape coming from the aforementioned signal converters.

Said system has a number of major disadvantages.

A first disadvantage is that the system implements an indexed addressing of the information, by which the bars store a code which provides access to the information stored in the memory of a computer, in the format of, for example, a data base. In order to obtain the information it is thus necessary to have a computer on-line, which is not convenient for the user since the system is not easily transportable.

Another disadvantage is that the reading is carried out remotely by means of infrared rays, which means that the presence of any obstacle between the reader and the bar code provided on the cable leads to deterioration of the information. Thus, for example, it is not possible to read a bar code associated with a buried cable.

Furthermore, it is not possible to modify the bar code remotely, which is also a major disadvantage, especially for buried cables.

There also exist other systems for in-situ gathering information, such as magnetic tapes or electronic chips, which require contact between said magnetic tapes or chips and the reading devices.

Said systems also have a number of major disadvantages.

A first disadvantage lies in the electromagnetic fields (induced currents) created by the cables, especially high-voltage cables. Said electromagnetic fields can invalidate the readings taken by the reading devices, and can cause serious illnesses amongst the personnel assigned to carry out the reading, due to the need to get excessively close to the cables. For this same reason, personnel run the risk of receiving large electrical discharges, especially from high-voltage cables.

Other systems for in-situ gathering information are those presented in patents DE 44 36 123, EP 0 408 320 and WO-A-93 21544.

Patent DE 44 36 123 describes an automatic recognition system for non-metallic pipes, which permits downloading and at the same time correctly updating during an inspection of constructional parameters of the pipe, such as material, nominal diameter or date of manufacture; and installation parameters, such as site of installation, date of installation or installing company. For this purpose a read/write memory resistant to corrosion, such as a transponder, is inserted into the wall of the pipe, preferably during manufacture thereof.

The stored data are read, and if necessary updated, by means of a mobile emitting/receiving unit which travels through the pipe.

Patent EP 0 408 320 describes a procedure for identifying and providing information relating to concealed piping and the like. Said piping and the like have a device which contains information, which device can be queried by means of an emitter/receiver connected to an aerial through a flexible cable. Said emitter/receiver has a built-in decoder and a recorder, so that when the emitter/receiver queries the device which contains information this device responds with a signal captured by the aerial and sent to the emitter/receiver, where it is decoded, recorded and shows the signal on a display screen.

The information shown can be, for example, the depth, direction of alignment of the piping or the like, the material of the piping, or the fluid circulating inside it.

Patent WO-A-93 21544 discloses passive markers to be placed immediately over or adjacent an object such as a cable joint. The marker includes a passive PROM unit and receives and accumulates in a capacitor the energy of detector impulses. By means of the PROM unit a modulated signal is transmitted to the detector at a working frequency of preferably 50-150 kHz.

From patents DE 44 36 123, EP 0 408 320 and WO-A-93 215544 it emerges that the transponder or the device which contains the information work in what is known as "full duplex", that is, they can emit and receive information at the same time. Moreover, with the known state of the art, said information-storage devices work in amplitude modulation, amplitude modulation being understood as the phenomenon of the amplitude of a carrier wave being varied in accordance with a modulating wave.

Said modulation system is used due to the fact that there is no exterior interference factor which can damage the information stored or the information transmitted.

The utilization of the systems described in the patents mentioned above has the disadvantage that said cables generate electromagnetic fields, strong ones in the case of high-voltage cables, due to the current circulating through them. The presence of said electromagnetic fields or of possible transients which produce peaks of current in the cables can generate undesired modulating waves which modify both the information stored and the information transmitted from the storage device to the mobile receiving/emitting device or from the mobile device to the storage device.

### DESCRIPTION OF THE INVENTION

The system of the invention manages to resolve the aforesaid disadvantages, while also providing other advantages which will be described below.

The system for in-situ gathering information relating to the history of a power cable and its accessories is characterized in that the means for storing the data on the history of the cable include a programmable memory, a memory-control circuit and an electronic circuit which acts as a filter, the programmable memory being of the EEPROM type, which emits the stored data in frequency modulation.

Thus, the information stored in the means for storing the data cannot be erased or altered by the electromagnetic fields generated by the current circulating through the cables, especially so in the case of high-voltage cables.

The memory chosen is of the EEPROM type because it permits updating the information stored, while it works in frequency modulation in order to prevent either the electromagnetic fields or the transients produced in the current circulating through the cable affecting the information transmitted, since, with this type of modulation, noise and distortion are minimized.

The electronic circuit which acts as a filter does not allow the signals with low frequencies (50 to 60 Hz) generated by the current circulating through the cable to pass, thereby preventing interferences, deletion or modification of the information stored in the programmable memory.

Working with frequency modulation means that the instantaneous frequency of a sinusoidal carrier wave is varied by an amount proportional to the magnitude of the modulating wave. Thus, when the programmable memory transmits the information which is stored therein, said information is not corrupted, since it is emitted at high frequencies and the signals generated by the cable are of the order of 50 to 60 Hz.

The operational frequency range of the EEPROM programmable memory is from 130 to 140 KHz, preferably from 132 to 138 KHz.

This frequency range is determined by the electronic circuit which acts as a filter, which in this case is a band-pass filter which only allows signals within said frequency range to pass. The signals generated by the current circulating through the cable, together with other possible signals (noise, transients, etc.), therefore do not affect the information stored in the programmable memory, since those signals are at lower frequencies.

Advantageously, the means for storing the data on ) the history of the cable comprise an inert device providing protection against the action of sunlight, corrosive chemical agents and impact and vibrations.

Moreover, the inert device protecting the programmable memory comprises a unit with an interior cavity into which the programmable memory is inserted and a solid and water-repellent sealing means which fills said cavity.

The inert protecting device comprises an additivated organic polymer containing between 2% and 10% of lampblack.

These characteristics provide total protection of the programmable memory against any environmental agent and against mechanical stress or blows.

Preferably, the means for remote reading the data on the history of the cable comprise portable electronic hand-held equipment which includes a first microprocessor, a radiofrequency generator/emitter controlled by said microprocessor, a second microprocessor which controls the emission and reception of data, and an aerial.

The portable electronic hand-held equipment permits remote reading of the information stored in the memory to be carried out and said information received in situ, without the presence of a personal computer being essential.

The first microprocessor also controls a printer, a digital display, a keyboard, the device for storing the data, of the EEPROM type, with capacity for at least one hundred readings and a system for communication with a computer.

The printer permits a paper print-out of the result of the reading, while the digital display allows the information displayed to be read.

The device for storing the data is necessary in order to allowing storage of the readings as they are taken, while the system for communication with a computer is useful for downloading the information obtained in the readings onto the computer.

According to one characteristic of the invention, the aerial is of high-Q ferrite, attached directly into the equipment.

Alternatively, the aerial is of the high-Q air-core type connected to the equipment by means of a cable.

The aerials must be of the high-Q type so that the signals they pick up lie within a range of frequencies suitable for the requirements.

The means for reading, entering and/or modifying data on the history of the cable include a radiofrequency recorder and a computer.

The computer stores the information which must be entered in the storage means. The radiofrequency recorder sends a signal to the programmable memory to indicate to it that the information to be stored is going to be sent.

The portable electronic hand-held equipment comprises a first pushbutton to activate reading of the information, a second pushbutton to activate printer operation, a third pushbutton to feed paper in the printer, and a fourth pushbutton for switching the equipment on and off.

The system is also characterized in that variations only in the type of aerial attached to the means for storing the data, to the remote-reading means or to the means for reading, entering and/or modifying the data achieves a range of working distances between 5.10⁻² m and 2 m.

The possible applications of the system of the invention are thus lent maximum compatibility.

Thus, if an installation has a variety of cables and each cable has its associated programmable memory, it will be necessary to get as close as possible to the memory from which information is desired, since if the reading is taken at a certain distance it would not be possible to know which programmable memory is emitting the information stored inside it.

If, on the other hand, the cable is a buried one, then the reading distance will be considerable.

### BRIEF DESCRIPTION OF THE DRAWINGS

For a better understanding of all that has been set out herein some drawings are attached which, schematically and solely by way of non-restrictive example, show a practical case of embodiment.

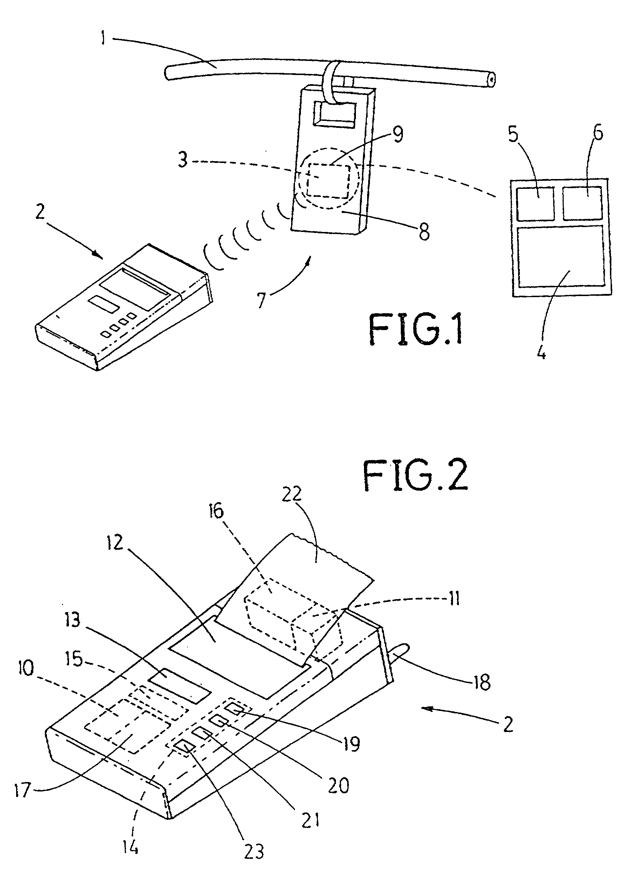

In said drawings, Figure 1 is a perspective view of the means for storing the data on the history of a cable situated beside it, and of the portable electronic hand-held equipment for taking remote readings of the cable-history data.

Figure 2 is a more detailed perspective view of the portable electronic hand-held equipment shown in Figure 1.

### DESCRIPTION OF A PREFERRED EMBODIMENT

As shown in Figure 1, the system of the invention for in-situ gathering information relating to the history of a cable 1 and its accessories comprises portable electronic hand-held equipment 2 for taking readings by radiofrequency of the information stored in the storage means 3.

Said storage means 3 comprise a programmable memory of the EEPROM type, a memory-control circuit 5, and an electronic circuit 6 which acts as a band-pass filter in the range of frequencies between 132 to 138 KHz.

A programmable memory 4 of the EEPROM type is used because this type of memory permits updating of the information which it stores, while the band-pass filter 6 is used because it only allows signals lying within the range of frequencies stated in the previous paragraph to pass, so as to prevent the information stored in the memory 6 being erased or modified by possible signals of frequencies outside the established range, mainly by signals of frequencies lower than those generated by the current circulating through the cable 1.

The system of the invention also comprises a computer and a recorder by radiofrequency (not shown) of the programmable memory 4.

Said programmable memory 4 comprises two data bases. The first stores information entered by the cable manufacturer, such as:
- operator who manufactured the cable 1;
- date of manufacture of the cable;
- place of manufacture;
- data relating to the make-up of the cable, such as materials, layers, etc;
while the second data base stores the data entered by the cable 1 installing company, such as:
- date of installation;
- operative who installed it;
- data relating to the installation, etc.

It is important to stress that the first data base is inaccessible to the installing company, so as to prevent alterations to the information.

The means 3 of storing data on the history of the cable are protected by a device 7 inert to rays of sunlight, corrosive chemical agents and resistant to impact and vibrations.

Moreover, the inert protecting device comprises a unit 8 with an interior cavity 9 into which are inserted the storage means 3 and a solid and water-repellent sealing means which fills said cavity.

The unit 8 of the inert protecting device 7 comprises an organic polymer additivated with between 2% and 10% of lampblack.

As shown by Figure 2, the portable electronic hand-held equipment 2 comprises a first microprocessor 10 which controls a radiofrequency generator/emitter 11, a printer 12, a digital display 13, a keyboard 14, a programmable memory 15 for the storage of at least one hundred readings, and a system for communication 16 with a computer; a second microprocessor 17 which controls the emission and reception of data; and a high-Q ferrite aerial 18.

The portable equipment also comprises a first pushbutton 19 to activate reading of the information, a second pushbutton 20 to activate operation of the printer 12, a third pushbutton 21 to feed paper 22 in the printer 12, and a fourth pushbutton 23 for switching the equipment 2 on and off.

The system thus operates as follows:

The programmable memory 4 for storing the information is recorded upon in advance by the company which manufactures the cable 1, with which the memory is subsequently associated.

Once the cable 1 has been installed, the installing company must enter the data relating to the installation, so that the entire history of the cable can be known at any time.

A computer (not shown) on which is stored the information to be downloaded and a radiofrequency recorder (not shown) are needed to enter the information in the programmable memory 4.

Use of the portable equipment 2 is necessary for reading all the information stored in the programmable memory 4.

Thus, when the radiofrequency generator/emitter 11 housed in the portable equipment 2 provides power to a capacitor associated with the programmable memory 4, said capacitor is charged. When the generator/emitter 11 ceases to provide power, the capacitor is discharged through the programmable memory 4 and a signal is generated, with frequency modulation, which sends by radiofrequency all the information stored in said memory. Said signal is picked up by the high-Q ferrite aerial 18, which is controlled by the second microprocessor 17, and is stored in the programmable memory 15 with capacity for up to at least one hundred readings, for subsequent display on the digital display 13, by the printer 12, or through the computer, once all the information has been downloaded onto it from the portable equipment 2 by means of a suitable software application.

The information is recorded in the programmable memory 4 in a similar way, but with the difference that the recorder sends a different signal to said memory, which detects that it must store all the information to be transmitted subsequently.

Despite the fact that reference has been made to specific embodiments of the invention, it will be clear to experts in the subject that the system described can have many variations and modifications, and that all the details mentioned can be replaced by others which are technically equivalent, without departing from the sphere of protection defined by the attached claims.

For example, it is possible to use other types of aerial, such as high-Q air-core aerials, for picking up the transmissions.

It is also important to stress that by variations only in the type of aerial (of different material, diameter and/or length, etc.) attached to the data-storage means 3, to the portable electronic hand-held equipment 2, or to the radiofrequency recorder, a range of working distances of between 5.10⁻² m and 2 m is achieved.

## Claims

1. System for in-situ gathering information relating to the history of a power cable (1) and its accessories comprising means for storing (3) the data on the history of the cable (1) positioned beside it, means (2) for remote reading the data and means for reading, entering and/or modifying said data, **characterized in that** the means for storing (3) the data on the history of the cable (1) comprise a programmable memory (4), a memory-control circuit (5) and an electronic circuit which acts as a filter (6), the programmable memory being of the EEPROM type, which emits the stored data in frequency modulation.

2. System as claimed in Claim 1, **characterized in that** the operational frequency range of the EEPROM programmable memory (4) is from 130 to 140 kHz, preferably from 132 to 138 kHz.

3. System as claimed in Claim 1, **characterized in that** the means for storing (3) the data on the history of the cable (1) comprise an inert device (7) providing protection against the action of sunlight, corrosive chemical agents and impact and vibrations.

4. System as claimed in Claim 3, **characterized in that** the inert device (7) protecting the programmable memory (4) comprises a unit (8) with an interior cavity (9) into which the programmable memory (4) is inserted and a solid and water-repellent sealing means which fills said cavity.

5. System as claimed in Claim 4, **characterized in that** the unit (8) of the inert protecting device (7) comprises an additivated organic polymer containing between 2% and 10% of lampblack.

6. System as claimed in Claim 1, **characterized in that** the means for remote reading of the data on the history of the cable comprise portable electronic hand-held equipment (2) which includes a first microprocessor (10), a radiofrequency generator/emitter (11) controlled by said microprocessor, a second microprocessor (17) which controls the emission and reception of data, and an aerial (18).

7. System as claimed in Claim 6, **characterized in that** the first microprocessor (10) also controls a printer (12), a digital display (13), a keyboard (14), the device (15) for storing the data, of the EEPROM type, with capacity for at least one hundred readings and system for communication (16) with a computer.

8. System as claimed in Claim 6, **characterized in that** the aerial (18) is of high-Q ferrite, attached directly into the equipment.

9. System as claimed in Claim 6, **characterized in that** the aerial (18) is of the high-Q air-core type connected to the equipment by means of a cable.

10. System as claimed in Claim 1, **characterized in that** the means for reading, entering and/or modifying data on the history of the cable comprise a radiofrequency recorder and a computer.

11. System as claimed in Claim 6, **characterized in that** the portable electronic hand-held equipment (2) comprises a first pushbutton (19) to activate reading of the information, a second pushbutton (20) to activate printer (12) operation, a third pushbutton (21) to feed the paper (22) in the printer (12), and a fourth pushbutton (23) for switching the equipment on and off.

12. System as claimed in Claims 1, 6 and 10, **characterized in that** variations only in the type of aerial (18) attached to the means (3) for storing the data, to the remote-reading means (2) or to the means for reading, entering and/or modifying the data achieve a range of working distances between 5.10⁻² m and 2 m.

## Patentansprüche

1. System zur Vor-Ort-Sammlung von Informationen in Bezug auf die Geschichte eines elektrischen Kabels (1) und Zubehör, das ein daneben angebrachtes Mittel für die Speicherung (3) der Daten zur Geschichte des Kabels (1), ein Mittel (2) für das Fern-Lesen der Daten und ein Mittel zum Lesen, Eingeben und/oder Ändern (3) der genannten Daten einschließt, **dadurch gekennzeichnet, dass** das Mittel zum Speichern (3) der Daten zur Geschichte des Kabels (1) einen programmierbaren Speicher (4), einen Speicher-Steuer-Schaltkreis (5) und einen als Filter fungierenden elektronischen Schaltkreis (6) beinhaltet, wobei der programmierbare Speicher vom Typ EEPROM ist, der die gespeicherten Daten in Frequenzmodulation aussendet.

2. System gemäß Patentanspruch 1, **dadurch gekennzeichnet, dass** der Betriebsfrequenzbereich des programmierbaren EEPROM-Speichers (4) von 130 bis 140 kHz, vorzugsweise von 132 bis 138 kHz, reicht.

3. System gemäß Patentanspruch 1, **dadurch gekennzeichnet, dass** das Mittel zum Speichern (3) der Daten zur Geschichte des Kabels (1) eine reaktionslose Vorrichtung (7) ist, die Schutz gegen die Einwirkung des Sonnenlichts, korrosive Chemikalien und Schläge und Vibrationen bietet.

4. System gemäß Patentanspruch 3, **dadurch gekennzeichnet, dass** die reaktionslose Vorrichtung (7), welche den programmierbaren Speicher (4) schützt, eine Einheit (8) mit einem Innenhohlraum (9), in den der programmierbare Speicher (4) eingesetzt wird, und einem soliden und wasserabweisenden Abdichtungsmittel umfasst, der den genannten Hohlraum ausfüllt.

5. System gemäß Patentanspruch 4, **dadurch gekennzeichnet, dass** die Einheit (8) der reaktionslosen Schutzvorrichtung (7) einen zugesetzten organischen Polymer umfasst, der zwischen 2% und 10% Lampenruß enthält.

6. System gemäß Patentanspruch 1, **dadurch gekennzeichnet, dass** das Mittel für das Fern-Lesen der Daten zur Geschichte des Kabels eine tragbare, in der Hand haltbare elektronische Ausrüstung (2) umfasst, die einen ersten Mikroprozessor (10), einen vom genannten Mikroprozessor gesteuerten Radiofrequenzgenerator/-sender (11), einen das Senden und den Empfang von Daten steuernden zweiten Mikroprozessor (17) und eine Antenne (18) beinhaltet.

7. System gemäß Patentanspruch 6, **dadurch gekennzeichnet, dass** der erste Mikroprozessor (10) auch einen Drucker (12), eine Digitalanzeige (13), eine Tastatur (14), die Vorrichtung (15) des Typs EEPROM zum Speichern der Daten mit einer Kapazität von mindestens 100 Lesungen und ein System zur Kommunikation (16) mit einem Computer steuert.

8. System gemäß Patentanspruch 6, **dadurch gekennzeichnet, dass** die Antenne (18) vom Typ High-Q-Ferrit ist, die direkt in der Ausrüstung befestigt ist.

9. System gemäß Patentanspruch 6, **dadurch gekennzeichnet, dass** die Antenne (18) vom Typ High-Q-Air-Core ist, die an die Ausrüstung mittels eines Kabels angeschlossen ist.

10. System gemäß Patentanspruch 1, **dadurch gekennzeichnet, dass** das Mittel zum Lesen, Eingeben und/oder Ändern der Daten zur Geschichte des Kabels eine Radiofrequenz-Aufnahmeeinrichtung und einen Computer umfasst.

11. System gemäß Patentanspruch 6, **dadurch gekennzeichnet, dass** die tragbare, in der Hand haltbare Ausrüstung (2) eine erste Taste (19) zur Aktivierung des Lesens der Information, eine zweite Taste (20) zur Aktivierung des Betriebs des Druckers (12), eine dritte Taste (21) zur Einführung des Papiers (22) in den Drucker (12) und eine vierte Taste (23) zum Ein- und Ausschalten der Ausrüstung umfasst.

12. System gemäß Patentanspruch 1, 6 und 10, **dadurch gekennzeichnet, dass** nur Veränderungen des Typs der am Mittel (3) zum Speichern der Daten befestigten Antenne (18), des Fern-Lese-Mittels (2) oder des Mittels zum Lesen, Eingeben und/oder Ändern der Daten einen Arbeitsabstandsbereich zwischen 5.10⁻² m und 2 m erzielen.

## Revendications

1. Système de collecte in situ d'information relative à l'historique d'un câble électrique (1) et de ses accessoires, comprenant des moyens de stockage (3) des données concernant l'historique du câble (1) placés à côté de celui-ci, des moyens (2) permettant une lecture à distance des données, et des moyens permettant de lire, de saisir et/ou de modifier lesdites données, **caractérisé en ce que** les moyens de stockage (3) des données concernant l'historique du câble (1) comprennent une mémoire programmable (4), un circuit de contrôle de la mémoire (5) et un circuit électronique faisant office de filtre (6), la mémoire programmable étant du type EEPROM, qui émet les données stockées en modulation de fréquence.

2. Système, tel que revendiqué dans la Revendication 1, **caractérisé en ce que** la marge opérationnelle de fréquence de la mémoire programmable EEPROM (4) se situe entre 130 et 140 kHz, de préférence entre 132 et 138 kHz.

3. Système, tel que revendiqué dans la Revendication 1, **caractérisé en ce que** les moyens de stockage (3) des données concernant l'historique du câble (1) comprennent un dispositif inerte (7) assurant la protection contre l'action de la lumière solaire, d'agents chimiques corrosifs et contre les impacts et les vibrations.

4. Système, tel que revendiqué dans la Revendication 3, **caractérisé en ce que** le dispositif inerte (7) protégeant la mémoire programmable (4) comprend un élément (8) doté d'une cavité intérieure (9) dans laquelle la mémoire programmable (4) est insérée et un moyen de fermeture solide et hermétique à l'eau qui comble ladite cavité.

5. Système, tel que revendiqué dans la Revendication 4, **caractérisé en ce que** l'élément (8) du dispositif inerte de protection (7) comprend un polymère organique additivé contenant entre 2 % et 10 % de noir de fumeé.

6. Système, tel que revendiqué dans la Revendication 1, **caractérisé en ce que** les moyens permettant la lecture à distance des données concernant l'historique du câble comprennent un équipement électronique portatif (2), qui inclut un premier microprocesseur (10), un générateur/émetteur de radiofréquences (11) commandé par ledit microprocesseur, un deuxième microprocesseur (17) qui commande l'émission et la réception des données, et une antenne (18).

7. Système, tel que revendiqué dans la Revendication 6, **caractérisé en ce que** le premier microprocesseur (10) commande également une imprimante (12), un tableau d'affichage numérique (13), un clavier (14), le dispositif de stockage des données, dû type EEPROM, d'une capacité d'au moins cent lectures, et un système permettant la communication (16) avec un ordinateur.

8. Système, tel que revendiqué dans la Revendication 6, **caractérisé en ce que** l'antenne (18) est en ferrite à haut Q, et accollée directement à l'équipement.

9. Système, tel que revendiqué dans la Revendication 6, **caractérisé en ce que** l'antenne (18) est du type à noyau d'air à haut Q, et reliée à l'équipement par un câble.

10. Système, tel que revendiqué dans la Revendication 1, **caractérisé en ce que** les moyens permettant de lire, de saisir et/ou de modifier les données concernant l'historique du câble comprennent un enregistreur de radiofréquences et un calculateur.

11. Système, tel que revendiqué dans la Revendication 6, **caractérisé en ce que** l'équipement électronique portatif (2) comprend un premier poussoir (19) destiné à activer la lecture des informations, un second poussoir (20) destiné à mettre en marche l'imprimante (12), un troisième poussoir (21) destiné à alimenter l'imprimante (12) en papier (22), et un quatrième poussoir (23) pour allumer et éteindre l'équipement.

12. Système, tel que revendiqué dans les Revendications 1, 6 et 10, **caractérisé en ce que** les variations uniquement dans le type d'antenne (18) attachée aux moyens (3) de stockage des données, aux moyens de lecture à distance (2) ou aux moyens permettant de lire, de saisir et/ou de modifier les données, atteignent un spectre de distances opérationnelles se situant entre 5.10⁻² et 2 m.
